(19) Europäisches Patentamt
European Patent Office
Office européen des brevets

(11) Veröffentlichungsnummer: **0 193 889**
**B1**

(12) # EUROPÄISCHE PATENTSCHRIFT

(45) Veröffentlichungstag der Patentschrift:
27.04.88

(51) Int. Cl.⁴: **B 01 J 23/96,** B 01 J 38/60,
C 01 G 55/00

(21) Anmeldenummer: **86102614.4**

(22) Anmeldetag: **28.02.86**

(54) Verfahren zur Regenerierung von inaktiven und vergifteten Platinkatalysatoren.

(30) Priorität: **06.03.85 DE 3507832**

(43) Veröffentlichungstag der Anmeldung:
**10.09.86 Patentblatt 86/37**

(45) Bekanntmachung des Hinweises auf die Patenterteilung:
**27.04.88 Patentblatt 88/17**

(84) Benannte Vertragsstaaten:
**BE CH DE FR GB IT LI NL**

(56) Entgegenhaltungen:
**CH-A-585 581**
**DE-B-1 088 037**
**DE-B-1 103 303**

(73) Patentinhaber: **BASF Aktiengesellschaft, Carl-Bosch- Strasse 38, D-6700 Ludwigshafen (DE)**

(72) Erfinder: **Biffar, Werner, Dr., Fontanesistrasse 11, D-6710 Frankenthal (DE)**
Erfinder: **Hofstadt, Otto, Utestrasse 36, D-6700 Ludwigshafen (DE)**
Erfinder: **Kartte, Klaus, Dr., Stettiner Strasse 1, D-6711 Beindersheim (DE)**
Erfinder: **Thomas, Erwin, Borngasse 12, D-6713 Freinsheim (DE)**
Erfinder: **Weiss, Franz- Josef, Dr., Schilfweg 1, D-6708 Neuhofen (DE)**

**Beschreibung**

Es ist bekannt, Hydroxylammoniumsalze durch katalytische Reduktion von Stickstoffmonoxid mit Wasserstoff an platinmetallhaltigen Katalysatoren in saurem Medium herzustellen. Für die technische Durchführbarkeit des Verfahrens sind Aktivität, Selektivität und Lebensdauer des eingesetzten Katalysators von wesentlicher Bedeutung.

Bei diesem Verfahren wird ein Platinträgerkatalysator verwendet, der beim Einsatz im Reaktor über einen Zeitraum einiger Wochen merklich an Selektivität und Aktivität verliert. Deshalb muß der Katalysator periodisch regeneriert werden. Für die Standzeit des Katalysators, definiert als die Zeit, in der der Katalysator im Reaktor ununterbrochen in Betrieb bleibt, ist auch das Verfahren der jeweiligen Regenerierurg von großem Einfluß. In der DE-PS 1 088 037 ist eine herkömmliche Regenerierung und ihre Einwirkung auf die anschließenden Fahrperioden beschrieben.

Trotz periodischer Regenerierung verliert ein längere Zeit eingesetzter Katalysator langsam seine ursprüngliche katalytischen Eigenschaften; die Selektivität fällt ab und die Standzeiten werden kürzer. Häufigeres Regenerieren wird erforderlich.

Ursache dieser Langzeiteffekte ist im wesentlichen eine ansteigende Belegung des Katalysators mit vergiftend wirkenden Metallen. Diese werden über das saure Reaktionsmedium bei der Korrosion von Leitungs- und Kesselstahl auf den Katalysator übertragen. Bei der Regenerierung kann man die Metalle zwar weitgehend mit Königswasser ablösen, sie werden jedoch bei einer reduktiven Fällung des Platins wieder mit diesem auf dem Katalysatorträger niedergeschlagen.

Die bisher bekannten Verfahren zur Reinigung des Katalysators von diesen Metallverunreinigungen scheiterten an einem zu hohen technischen Aufwand und an den mit der Reinigung verbundenen hohen Platinverlusten.

Es war daher die Aufgabe gestellt, ein Verfahren zur Wiederherstellung der ursprünglichen katalytischen Eigenschaften von langjährig eingesetzten Platinträgerkatalysatoren zu entwickeln, die bei der Herstellung von Hydroxylammoniumsalzen durch katalytische Reduktion von Stickstoffmonoxid mit Wasserstoff in wäßrigen Lösungen von Mineralsäuren verwendet werden.

Gegenstand der Erfindung ist ein Verfahren zur Reinigung von vergifteten Platinträgerkatalysatoren, durch das die oben erwähnten Nachteile vermieden werden.

Überraschend wurde nämlich gefunden, daß man Edelmetallkatalysatoren, insbesondere Platinkatalysatoren, die auf Trägern aufgeträgen sind und die durch langjährigen Einsatz bei der Herstellung von Hydroxylammoniumsalzen durch katalytische Reduktion von Stickstoffmonoxid mit Wasserstoff in wäßriger Mineralsäure durch Metall vergiftet sind, ohne besonderen technischen und apparativen Aufwand regenerieren kann, wenn man die metallischen Verunreinigungen mit Salpetersäure oder Königswasser löst, die Lösung neutralisiert, aus der neutralisierten Lösung die störenden Metalle durch ein selektives Fällungsreagens fällt und die gereinigte Platinlösung der erneuten Verwendung zur Katalysatorherstellung zuführt.

Bei starker Schwermetallbeladung des Platinkatalysators kann man die metallischen Verunreinigungen in Königswasser auflösen.

Als selektive Fällungsreagentien kann man vorteilhaft organische Komplexbildner, die mit den metallischen Verunreinigungen in Wasser unlösliche oder schwerlösliche Komplexe bilden, wie z. B. Chinolin-, Carbazon-, Aminohydroxybenzol- und Anthrachinonderivate verwenden. Die Edelmetallverluste werden durch das erfindungsgemäße Verfahren auf ein Minimum beschränkt.

Im allgemeinen geht in verdünnter Salpetersäure bereits ein großer Teil der Metallverunreinigungen in Lösung, das Platin bleibt im wesentlichen ungelöst auf dem Träger; nach Neutralisation der abfiltrierten Salpetersäurelösung kann man die darin in konzentrierter Form enthaltenen störenden Metalle selektiv fällen, während die vorhandenen geringen Platinanteile in Lösung bleiben. Als selektive Fällungsmittel eignen sich Komplexbildner, die mit den störenden Übergangsmetallen schwerlösliche Komplexebilden, nicht aber mit Platin. Nach Abtrennung des Niederschlags kann man das Filtrat mit dem vorgereinigten Katalysator in verdünntem Königswasser aufschlämmen und weiterverarbeiten.

Bei der Behandlung mit verdünnter Salpetersäure bleibt die Abtrennung von störenden Metallen unvollständig. Zur weitergehenden Abreicherung der Metallverunreinigungen ist es vorteilhaft, den Katalysator in Salpetersäure-/Salzsäuremischung (Königswasser) aufzuschlämmen. Hierbei werden neben Platin auch alle störenden Metalle vom Träger abgelöst. Nach Abtrennung des Trägers, z. B. Graphit, wird die Königswasserlösung neutralisiert und ein selektives Fällungsmittel zugegeben. Der nahezu platinfreie Niederschlag wird abgetrennt und kann verworfen bzw. weiter aufgearbeitet werden. In der gereinigten Platinlösung kann der Träger wieder suspendiert und in üblicher Weise das Edelmetall aufgefällt werden, Alternativ kann auch neues Trägermaterial eingesetzt werden.

Ist ein Austausch des Trägermaterials ohnehin geplant, so kann die selektive Metallfällung auch unmittelbar nach Aufschlämmung des Altkatalysators in Königswasser und Neutralisation der Suspension erfolgen. Trägermaterial und Fällungsprodukt können dann gemeinsam abgetrennt und verworfen werden.

Als selektive Fällungsreagentien haben sich eine Reihe von organischen Komplexbildnern bewährt, die mit den metallischen Verunreinigungen in Wasser unlösliche oder schwerlösliche Komplexe bilden. Insbesondere geeignet sind 8-Hydroxychinolin, Chinosol, 5,7-Dibrom-8-hydroxychinolin, Chinaldin und 1,5-Diphenylthiocarbazon. Weiterhin geeignet sind Alizarin und 1,2-Aminohydroxy-benzolderivate. Die Dosierung kann in stöchiometrischen Mengen, entsprechend dem Gehalt der störenden Metalle, erfolgen. Sichtbar wird der Mengenbedarf zumeist daran, daß die Niederschlagsbildung bei Zusatz des Fällungsreagens nach Überschreiten des stöchiometrischen Mengenbedarfs endet.

Die Vorteile des Verfahrens beruhen darauf, daß es ohne technischen Aufwand im Zuge der normalen Regenerierung durchgeführt werden kann. Die Gesamtlebensdauer des Katalysators, d.h. die Abstände zwischen vollständigem Katalysatorwechsel werden erheblich verlängert. Der Altkatalysator kann unmittelbar im Betrieb aufgearbeitet werden.

**Beispiel**

A. Reinigung der Katalysatoren

1. 50 g eines mehrjährig eingesetzten Katalysators werden in verdünnter $HNO_3$-Lösung 16 h bei 80°C gerührt. Der Katalysator wird abgetrennt und in verdünntem Königswasser suspendiert. Das Filtrat wird mit Natriumcarbonat neutralisiert (bis pH 6-7). Tropfenweise wird eine 3,5 %-ige 8-Hydroxychinolinacetat Lösung zudosiert, bis bei weiterer Zugabe kein Niederschlag mehr auftritt. Der Niederschlag wird abgetrennt und das Filtrat mit der Königswassersuspension des vorgereinigten Katalysators vereinigt. Nach Neutralisation mit Soda bei pH 5 und Zusatz von Natriumacetat wird bei 80°C vierwertiges Platin mit 3 %-iger wäßriger Natriumdithionitlösung vollständig zur zweiwertigen Stufe reduziert, mit konz. Ameisensäure auf Graphit reduktiv aufgefällt und nach Ablauf der Reaktion nachgewaschen. Der Gehalt an störenden Metallionen wurde um 50 % reduziert.

2. 600 g trockener gebrauchter Katalysator wird wie in Beispiel 1 gereinigt und regeneriert.

3. 50 g eines mehrjährig eingesetzten gebrauchten Katalysators werden in verdünntem Königswasser 16 h bei 80°C gerührt. Nach Abtrennung des Trägermaterials wird das Filtrat mit Natriumcarbonat bis pH 4 bis 5 neutralisiert. Tropfenweise wird eine 10 %-ige wäßrige Chinosollösung zugegeben bis bei weiterer Zugabe kein Niederschlag mehr auftritt. Nach Abtrennung des schwerlöslichen Niederschlags wird das Filtrat mit dem Träger vereinigt und verdünntes Königswasser zugegeben. Nach dreistündigem Rühren bei 80°C wird die Katalysatorsuspension mit Natriumcarbonat auf pH 5 eingestellt und nach Zusatz von Natriumacetat bei 80°C mit 3 %-iger wäßriger Natriumdithionitlösung versetzt. Vierwertiges Platin wird dabei vollständig zu zweiwertigem Platin reduziert. Mit konz. Ameisensäure wird das Edelmetall auf den Graphitträger aufgefällt. Der Gehalt an störenden Metallionen wird um > 90 % gesenkt.

4. 50 g eines mehrjährig eingesetzten gebrauchten Katalysators werden in 50 ml verdünntem Königswasser 16 h bei 80°C gerührt. Durch Zugabe von Natriumcarbonat wird der PH-Wert der Suspension auf 6 eingestellt und 3,5 %-ige Oxinacetatlösung zugegeben. Graphit und Fällungsniederschlag werden abgetrennt und mit wenig Wasser gewaschen, das dem Filtrat zugemischt wird.
In dem vereinigten Filtrat werden 49,5 g frischer Graphit suspendiert, mit 10 ml konz. Königswasser angesäuert und 6 h bei 80°C gerührt. Die weitere Verarbeitung zum Katalysator erfolgt analog Versuch 3. Bei diesem vollständigen Auswechseln des Trägers bleiben unter 5 Gew.-% des Platins auf dem Fällungsniederschlag zurück und gehen somit verloren.

5/7 Analog Versuch 4 werden 1,5-Diphenylthiocarbazon (5), Chinaldin (6 und 5,7-Dibrom-8-hydroxychinolin (7) als Fällungsmittel mit gleich guten Ergebnissen eingesetzt. Bei Alizarin und Aminohydroxybenzolen liegen die Platinverluste bei etwa 5 bis 15 Gew.-%.

B. Test der Katalysatoren

8. 4,8 g des nach Beispiel 1 regenerierten Katalysators werden in einem Laborglasreaktor in 120 ml 4,3 n $H_2SO_4$ suspendiert und bei 40°C unter kräftigem Rühren (Höschrührer 3500 Upm) 4 Stunden mit 8,4 1/h Mischgas bestehend aus 35,4 % NO und 64,6 % $H_2$ umgesetzt. Die anschließende Bilanzierung der Analysedaten ergibt eine auf NO bezogene Raumzeitausbeute von

$$1,064 \left[ \frac{1 \text{ NO-Umsatz}}{1 \text{ } H_2SO_4 \cdot \text{Molvolumen} \cdot \text{Verweilzeit [h]}} \right].$$

Die Hydroxylammoniumsalz-Ausbeute betrug

$$0,850 \left[ \frac{1 \text{ NO zu } NH_3OH^+ \text{-Umsatz}}{1 \text{ } H_2SO_4 \cdot \text{Molvolumen} \cdot \text{Verweilzeit [h]}} \right].$$

Zum Vergleich sind die entsprechenden Daten für einen regenerierten, aber nicht Oxin-gereinigten Katalysator angegeben. Die Raumzeitausbeute beträgt hier 1,029, die Hydroxylammoniumsalz-Ausbeute

**0 193 889**

aber nur 0,729.

9. 200 g Katalysator aus Beispiel 2 werden in einem großen Laborreaktor in 5 l 4,3 n H$_2$SO$_4$ suspendiert und bei 40°C unter kräftigem Rühren (Höschrührer 1000 Upm) mit 255 l/h Mischgas der Zusammensetzung 34,0 % NO und 66,0 % H$_2$ umgesetzt, bis die Normalität der Säurelösung auf etwa 0,4 bis 0,5 gesunken ist. Daraufhin wird die Produktlösung abdekantiert. Nach Zugabe neuer Schwefelsäure wird diese Reaktion 3mal wiederholt. Die Ergebnisse an Hand der Hydroxylammonium-Ausbeute werden in der folgenden Tabelle 1 mit den entsprechenden Werten eines frisch hergestellten Standardkatalysators verglichen.

**Tabelle 1**

| Behandlung | Erfindungsgemäß gereinigter Katalysator | frisch hergestellter Katalysator unter Verwendung reinen Platin-chlorids und neuen Trägermaterials |
|---|---|---|
| 1 | 0,58 | 0,64 |
| 2 | 0,60 | 0,55 |
| 3 | 0,56 | 0,56 |
| 4 | 0,55 | 0,55 |

Der Katalysator, regeneriert ohne Oxinbehandlung, zeigt bereits bei der ersten Behandlung keine ausreichende Aktivität mehr.

10. Die Tests der Katalysatoren in den Versuchen 3 bis 5 werden wie in Versuch 6 durchgeführt.

**Tabelle 2**

| Versuch | RZA | Hydroxylaminausbeute |
|---|---|---|
| 3 | 0,925 | 0,79 |
| 4 | 0,942 | 0,82 |
| 5 | 0,946 | 0,80 |
| 6 | 0,957 | 0,83 |
| 7 | 0,939 | 0,81 |

**Patentansprüche**

1. Verfahren zur Regenerierung von Edelmetallkatalysatoren, insbesondere Platinkatalysatoren, die auf Trägern aufgetragen sind und die durch langjährigen Einsatz bei der Herstellung von Hydroxylammoniumsalzen durch katalytische Reduktion von Stickstoffmonoxid mit Wasserstoff in wäßrigen Mineralsäuren durch Metalle vergiftet sind, dadurch gekennzeichnet, daß man die metallischen Verunreinigungen mit Salpetersäure oder Königswasser löst, die Lösung neutralisiert, aus der neutralisierten Lösung die störenden Metalle durch ein selektives Fällungsreagens fällt und die gereinigte Platinlösung der erneuten Verwendung zur Katalysatorherstellung zuführt.

2. Verfahren nach Anspruch 1, dadurch gekennzeichnet, daß man mit einem organischen Komplexbildner als Fällungsreagens die metallischen Verunreinigungen selektiv vom katalytisch aktiven Metall abtrennt.

3. Verfahren nach den Ansprüchen 1 und 2, dadurch gekennzeichnet, daß man Chinolin-, Carbazon-, Aminohydroxybenzol oder Anthrachinonderivate verwendet.

**Claims**

1. A process for regenerating a noble metal catalyst, in particular a platinum catalyst, which is applied to a carrier and has become poisoned by metals as a result of being used for many years in the preparation of hydroxylammonium salts by catalytic reduction of nitric oxide with hydrogen in an aqueous mineral acid, wherein the metallic impurities are dissolved using nitric acid or aqua regia, the solution is neutralized, the troublesome metals are precipitated from the neutralized solution by means of a selective precipitating reagent, and the purified platinum solution is reused for the preparation of the catalyst.

4

2. A process as claimed in claim 1, wherein the metallic impurities are separated selectively from the catalytically active metal using an organic complexing agent as the precipitating reagent.

3. A process as claimed in claim 1, wherein a quinoline, carbazone, aminohydroxybenzene or anthraquinone derivative is used.

**Revendications**

1. Procédé de régénération de catalyseurs en métal noble, en particulier de catalyseurs en platine, qui sont appliqués sur des supports et qui sont pollués par des métaux, par suite d'une utilisation de longue durée lors de la préparation de sels d'hydroxylammonium par réduction catalytique de bioxyde d'azote avec de l'hydrogène dans des sels minéraux aqueux, caractérisé par le fait que l'on dissout les impuretés métalliques avec de l'acide azotique ou de l'eau régale, on neutralise la solution, on précipite de la solution neutralisée les métaux nuisibles par un réactif de précipitation sélectif et on amène la solution de platine purifiée à la nouvelle utilisation pour la préparation du catalyseur.

2. Procédé selon la revendication 1, caractérisé par le fait que l'on sépare sélectivement les impuretés métalliques du métal actif catalytiquement avec un complexant organique comme réactif de précipitation.

3. Procédé selon les revendications 1 et 2, caractérisé par le fait que l'on utilise des dérivés de quinoline, de carbazone, d'aminohydroxybenzene ou d'anthraquinone.